Europäisches Patentamt

European Patent Office

Office européen des brevets

(19)

(11) **EP 0 561 974 B1**

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(21) Anmeldenummer: **92901970.1**

(22) Anmeldetag: **13.12.1991**

(51) Int. Cl.$^6$: **B23K 11/25**

(86) Internationale Anmeldenummer:
**PCT/DE91/00972**

(87) Internationale Veröffentlichungsnummer:
**WO 92/10326 (25.06.1992 Gazette 1992/14)**

(54) **VERFAHREN UND VORRICHTUNG ZUR ÜBERPRÜFUNG DER QUALITÄT VON PUNKTSCHWEISSVERBINDUNGEN**

PROCESS AND DEVICE FOR CONTROLLING THE QUALITY OF SPOT-WELDED JOINTS

PROCEDE ET DISPOSITIF POUR LE CONTROLE DE LA QUALITE D'ASSEMBLAGES SOUDES PAR POINTS

(84) Benannte Vertragsstaaten:
**BE DE ES FR GB IT NL SE**

(30) Priorität: **13.12.1990 DE 4039847**
**18.04.1991 DE 4112732**

(43) Veröffentlichungstag der Anmeldung:
**29.09.1993 Patentblatt 1993/39**

(73) Patentinhaber: **SIEMENS AKTIENGESELLSCHAFT**
**80333 München (DE)**

(72) Erfinder: **FORTMANN, Manfred**
**D-5203 Much (DE)**

(56) Entgegenhaltungen:
**EP-A- 0 350 013**

- **WELDING JOURNAL Bd. 69, Nr. 5, Mai 1990, MIAMI U.S.A. Seiten 177 - 180; W.V. ALCINI: 'Experimental Measurement of Liquid Nugget Heat Convection in Spot Welding'**

## Beschreibung

Die vorliegende Erfindung betrifft ein Verfahren zur Überprüfung der Qualität von Punktschweißverbindungen, die mittels einer im Kontakt mit den miteinander zu verschweißenden Teilen aus mindestens einem ersten Metall bringbaren Elektrode aus einem zweiten Metall ausgeführt werden.

Punktschweißungen werden vielfach, so z. B. im Automobilbau verwendet, wo metallische Teile, insbesondere Blechteile miteinander verbunden werden sollen. Insbesondere wenn die Punktschweißverbindung nicht nur zum vorläufigen Zusammenheften von Bauteilen dienen soll, sondern die endgültige Verbindung zwischen diesen darstellt muß sichergestellt sein, daß sie den Betriebsbelastungen standhalten kann. Bestimmend für die Qualität eines solchen Schweißpunktes ist eine ausreichende Wärmeentwicklung und Schmelzbadgröße unter den Elektroden. Fließt der Schweißstrom z. B. über Nebenschlüsse, kann dies zu sog. Kaltschweißungen mit ungenügenden Festigkeiten führen. Vor allem im Zuge von automatisierten Fabrikationsprozessen besteht das Bedürfnis nach einer Überprüfung der Qualität solcher Punktschweißungen, die mit geringerem zeitlichen und apparativen Aufwand durchgeführt werden kann als die an sich möglichen, sonst zur Materialprüfung verwendeten Verfahren (z. B. durch Röntgen oder Ultraschall). Bekannt ist es, stichprobenmäßig Kontrollen durch das gewaltsame Aufreißen von derartigen Schweißverbindungen durchzuführen.

Aufgabe der vorliegenden Erfindung ist ein zerstörungsfreies Prüfverfahren für Punktschweißungen, das fast zeitgleich unmittelbar nach jeder einzelnen erfolgten Schweißung mit geringem Aufwand durchgeführt werden kann. Es soll darüber hinaus ohne den Einsatz empfindlicher Meßinstrumente in unmittelbarer Nähe der Schweißstelle auskommen. Auch soll eine Einrichtung zur Durchführung des Verfahrens angegeben werden.

Die Lösung dieser Aufgabe erfolgt dadurch, daß die am Schweißpunkt während eines definierten Zeitraumes nach Durchführung der Schweißung herrschende Temperatur durch Abgreifen der zwischen den Teilen bzw. an der Elektrode durch das Schweißen induzierten thermoelektrischen Spannung ermittelt und der Verlauf des gemessenen Temperaturabfalles zur Grundlage der Qualitätsbeurteilung gemacht wird, wobei die Qualität um so schlechter anzunehmen ist, je schneller die Kurve der Temperaturwerte abfällt und von der Geraden abweicht.

Der Schweißstrom wird nach Beendigung der Schweißung abgeschaltet und die Elektrode sowie das Werkstück selbst, die aus verschiedenen Metallen bestehen, wirken dann als Thermoelement. Die dann induzierte Spannung ist je nach den verwendeten Metallen unterschiedlich und beträgt im vorzugsweise betrachteten Fall des Verschweißens von Stahl-(d. h. Eisen-)Teilen mit Hilfe einer Kupferelektrode (u. U. mit Beimengungen von Chrom und Zirkon) ca. 1 mV je 100 K der Temperatur, die die Schweißstelle zu diesem Zeitpunkt noch aufweist. Ist der Werkstoff zwischen den Elektroden ausreichend verflüssigt worden und so eine zufriedenstellende Schweißverbindung zustandegekommen, so wird die Masse des geschmolzenen Metalls verhältnismäßig langsam und vor allem stetig abkühlen, d. h. der Verlauf der Temperaturkurve wird annähernd linear sein; allerdings ist mit einer Ausbuchtung der Kurve nach oben in dem Temperaturbereich zu rechnen, in dem die Erstarrungswärme freigesetzt wird. Der Einfluß des Temperaturabfalles in den umgebenden, fest gebliebenen Bereichen der zu verbindenden Teile tritt demgegenüber zurück. Ist dagegen infolge ausbleibenden Aufschmelzens überhaupt keine Verbindung zustandegekommen, so wird der Temperaturabfall schneller und mehr parabelförmig verlaufen, ohne daß eine Verzögerung desselben durch die dann ja ausbleibende Freisetzung der Erstarrungswärme stattfinden kann. Zwischen diesen beiden Extremfällen werden beliebig viele Temperaturabfallkurven zu liegen kommen, die ein nur teilweises Verschmelzen der Teile miteinander wiederspiegeln. Es liegt im Belieben des Fachmanns, unterhalb welcher Grenze er die betreffende Schweißverbindung als unzulänglich ansehen will. Die daraufhin zur Qualitätssicherung zu ergreifenden Maßnahmen (Wiederholung der Schweißung bzw. Aussortieren des Werkstückes als Ausschuß) können dann, wie dem Fachmann geläufig, auch automatisiert erfolgen. Dabei können die zur Erfassung der thermoelektrischen Spannungen erforderlichen Meßinstrumente abseits der Schweißstelle angeordnet und den dort herrschenden Belastungen durch hohe Temperatur, Dämpfe usw. entzogen werden. Als Bewertungsmaßstab der Qualität kann das Ergebnis der Bildung des folgenden Quotienten dienen

$$\frac{T_0 \cdot (t_1 - t_0)}{T_0 - T_1}$$

worin $T_0$ die zum ersten Zeitpunkt $t_0$ nach der Schweißung gemessene Temperatur bedeutet und $T_1$ die zu einem zweiten Zeitpunkt $t_1$ gemessene Temperatur. Der günstige Wert für $(t_1 - t_0)$ ist experimentell zu ermitteln und kann typischerweise etwa 25 ms betragen.

Eine Ausgestaltung des erfindungsgemäßen Verfahrens besteht darin, daß die in an sich bekannter Weise während der Schweissung gemessen Werte der Schweißspannung U und des Schweißstromes I in Verbindung mit dem Verlauf des gemessenen Temperaturabfalls zur Grundlage der Qualitätsbeurteilung gemacht werden. Die eingespeiste Leistung $P = U \times I$ (für Gleichstrom) kann in einer Recheneinrichtung gespeichert und anschließend mit gemessenen Temperaturwerten korreliert werden. Dabei ist die Qualität umso schlechter anzunehmen, je kleiner der Quotient $\frac{T}{P}$ aus der gemessenen Temperatur T und der eingespeisten Leistung P ist. Auch hierbei sind die z.B. für verschiedene Blechdicken oder Materialchargen als zulässig anzusehenden Grenzwerte für den Quotienten

$$\frac{T_0, T_1}{P}$$

auf dem Versuchswege festzustellen.

Ein niedriger Quotient deutet darauf hin, daß (z.B. infolge von Zunder oder Schmutz auf der Werkstückoberfläche) der Stromfluß zwischen Elektrode und Werkstück behindert war.

Für die gebräuchlichen Verfahren, die mit zwei auf einander entgegengesetzten Seiten der Teile einander gegenüberliegenden, gleichzeitig mit letzteren in Kontakt kommenden Elektroden ausgeführt werden, wird gemäß einer weiteren Ausgestaltung der Erfindung die Temperatur aus dem Mittelwert zwischen den getrennt an jeder Elektrode gemessenen Spannungen ermittelt. Hierdurch können parasitäre Thermospannungen, z. B. auf der Eisenseite, und eventuelle kleine Leckströme des während der Messung abgeschalteten Schweißstromes ausgeglichen werden.

Eine zur Durchführung des beschriebenen Verfahrens geeignete Vorrichtung besteht im wesentlichen aus mindestens einem zwischen den miteinander zu verschweißenden Teilen und einer Schweißelektrode schaltbaren Voltmeter; einem Trigger, der bei Beendigung eines Schweißvorganges ein Signal aussendet; einem Zeitgeber zur Angabe des Beginns und Endes mindestens einer definierten Zeitspanne nach dem Aussenden des Signals der Beendigung des Schweißvorganges und einer Einrichtung zur Anzeige des zwischen dem Beginn und dem Ende der definierten Zeitspanne erfolgten Abfalls in der Anzeige des Voltmeters.

Ein Ausführungsbeispiel der Erfindung ist schematisch in der Zeichnung dargestellt und zwar zeigen

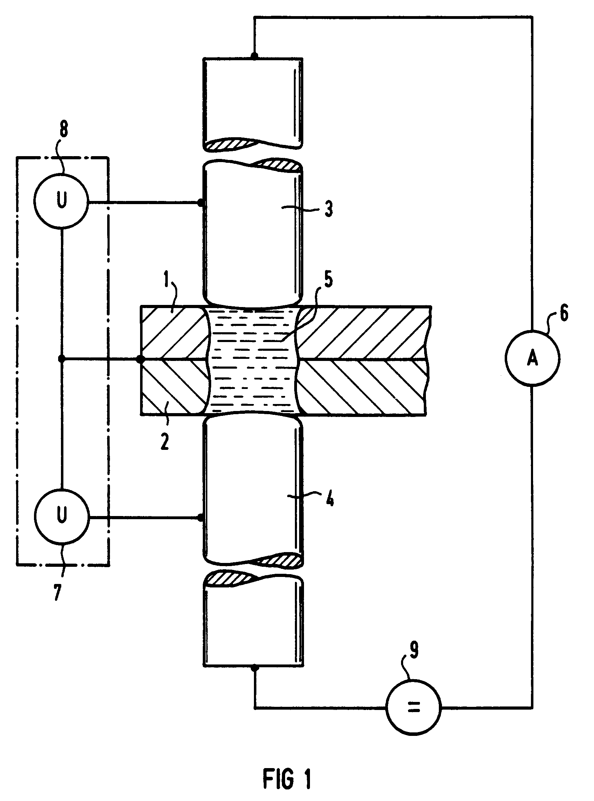

Figur 1    die zur Durchführung des Verfahrens bestimmte Vorrichtung,
Figur 2    ein typisches, die Qualitätsbewertung ermöglichendes Diagramm und

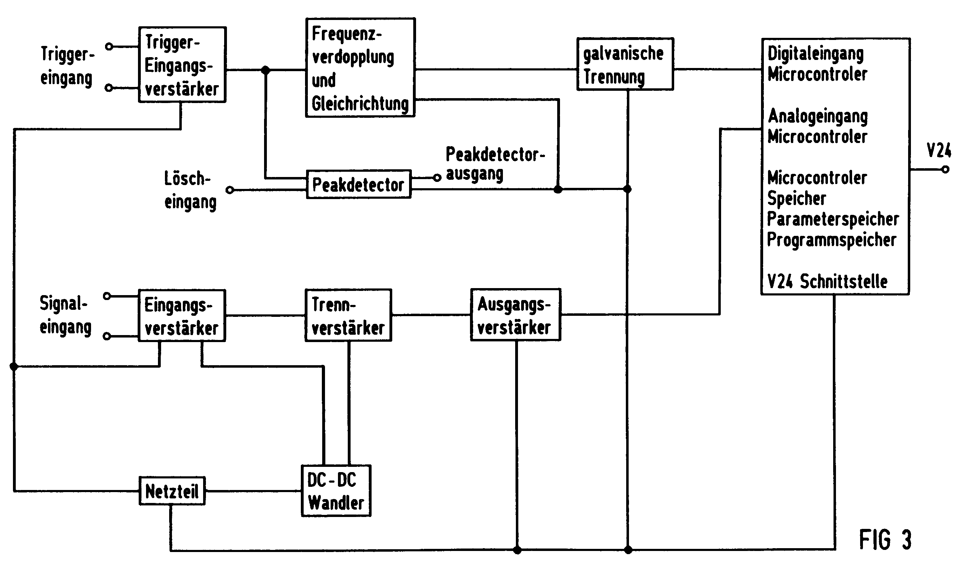

Figur 3    ein Blockschaltbild der zur Auswertung der Signale dienenden Einrichtung.

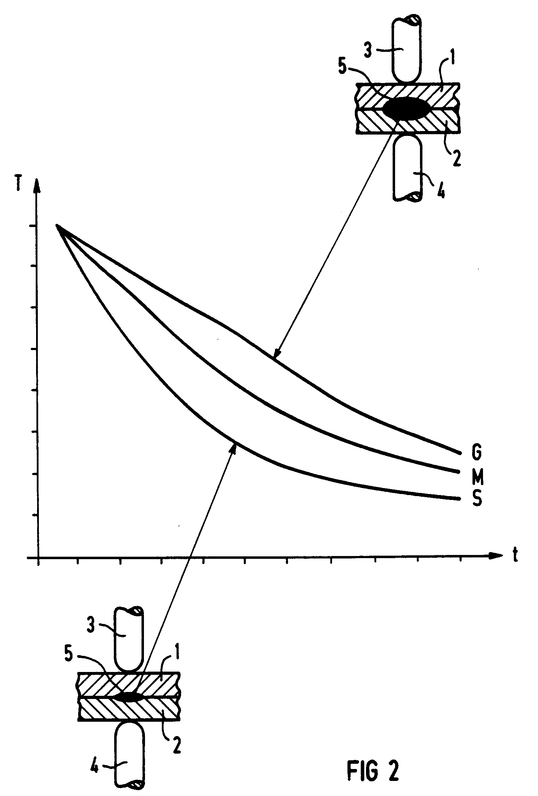

Zwei Stahlbleche 1, 2 werden durch eine Punktschweißung miteinander verbunden, indem zwei Kupferelektroden 3, 4 einander gegenüberliegend mit den zusammengepreßten Blechen 1, 2 in Kontakt gebracht werden. Hierauf werden diese mit Hilfe einer bekannten Schweißstromquelle 9 mit einem Strom, meist einem Gleichstrom, beaufschlagt, was zu einer Erhitzung und schließlich zum Schmelzen an einer Schweißstelle 5 führt, wodurch die Bleche 1, 2 dauerhaft miteinander verbunden werden. Die Stärke des Schweißstromes wird mit Hilfe eines Ampèremeters 6 gemessen und seine Spannung von zwei Voltmetern 7, 8. Nach Beendigung des Schweißvorgangens werden die zu diesem Zweck zweckmäßigerweise mit einer Meßbereichsumschaltung versehenen Voltmeter 7, 8 einerseits an jeweils eine der Elektroden 3, 4 und andererseits an die Bleche 1, 2 angeschlossen. Durch die erst allmählich, in einem gewissen Tempo abnehmende Temperatur an der Schweißstelle 5 wird zwischen den Blechen 1, 2 und den Elektroden 3, 4 eine Thermospannung induziert, die zu verschiedenen, mindestens jedoch zwei Zeitpunkten $t_0$ und $t_1$ mit Hilfe der Voltmeter 7, 8 gemessen wird. Wird zu einer Vielzahl von Zeitpunkten gemessen, so können, wie in der Figur 2 dargestellt, für die einzelnen Schweißvorgänge jeweils Kurven des Temperaturabfalles aufgezeichnet werden, von denen hier drei als exemplarisch anzusehende und mit G (für gut), M (für mittel) und S (für schlecht) bezeichnete gezeigt werden. Wie erkennbar, ist der Verlauf der Kurve G annähernd linear; im mittleren Zeitbereich zeigt sie eine leichte Ausbuchtung nach oben, was auf die Verzögerung des Temperaturabfalles wegen der in diesem Temperaturbereich reichlich freiwerdenden Erstarrungswärme einer wie rechts oben gezeigt durchgehenden, voll befriedigenden Schweißstelle 5 zurückzuführen ist. Die Kurve S zeigt dieses Merkmal nicht, so daß auf eine zumindest wie links unten gezeichnet sehr unvollkommene, u. U. auch völlig fehlende Schweißverbindung geschlossen werden kann, zumal die Kurve einen annähernd parabelförmigen Verlauf hat; dies deutet darauf hin, daß eine zunächst schnelle, dann langsamer werdende Abkühlung von zwar erhitzten, aber nicht zum Schmelzen gebrachten Blechteilen vorliegt. Die Kurve M ihrerseits grenzt die als gerade noch akzeptabel anzusehenden Schweißungen nach unten ab. Ihr Verlauf wird mit Rücksicht auf externe Parameter, z. B. die bei der Dimensionierung nach Zahl und Ausdehnung der Schweißpunkte eingerechneten Sicherheiten bestimmt. Da das hier vorgeschlagene Verfahren sicherstellt, daß keine Fehlschweißungen unentdeckt bleiben, können die bei der Konstruktion des Werkstückes vorgesehenen Sicherheiten (z. B. in Form zusätzlicher, bei einwandfreier Schweißung an sich nicht notwendiger Schweißpunkte) verringert werden, was zu erheblichen Ersparnissen führen kann. Für praktische Zwecke wird vielfach die Temperaturmessung zu nur zwei Zeitpunkten genügen, wenn der zweite Zeitpunkt so gelegt wird, daß an der entsprechenden Stelle des Diagramms die Spreizung der verschiedenen Kurven möglichst groß ist. Ist ferner die gemessene Temperatur im Verhältnis zu der beim Schweißvorgang aufgewendeten Leistung zu niedrig, kann ebenfalls davon ausgegangen werden, daß die Schweißung unvollkommen ist. Die gemessene Temperatur kann falls erforderlich in bekannter Weise auf eine konstante Referenztemperatur, z. B. die Umgebungstemperatur bezogen werden (nicht gezeigt).

Sinkt nach der Beendigung eines Schweißvorgangens der mittels des Ampèremeters 6 gemessene Schweißstrom auf Null ab, dient dies als Triggersignal zum Ingangsetzen der die Qualität des Schweißpunktes kontrollierenden Messung. Das Signal wird verstärkt und gleichgerichtet. Bei Bedarf, beispielsweise wenn nur mit der einen Halbwelle eines Wechselstromes geschweißt wird, erfolgt auch eine Frequenzverdoppelung. Danach erfolgt eine galvanische Trennung zu der eigentlichen Auswerteeinheit. Ein Peakdetektor dient dazu, zu Beginn der Inbetriebnahme der Einrichtung die Höhe einer Spannungsschwelle festzulegen, jenseits derer überhaupt ein auswertbarer Schweißvorgang vorliegt. Dieser Wert kann zur Anpassung an die verschiedenen Schweißparameter gelöscht und dann erneut aufgebaut werden. Das von den Voltmetern 7, 8 herrührende Eingangssignal wird ebenfalls verstärkt und zur Unterdrückung parasitärer Signale getrennt. Sowohl das Trigger- als auch das eigentliche Meßsignal gelangen schließlich in eine datenverarbeitende Einrichtung, in der die Signale mit verschiedenen gespeicherten Parametern, wie Schweißstrom, -dauer, Anzahl und Dauer der zwischen der Erfassung der einzelnen Meßwerte verstreichenden Zeitspannen korreliert werden. Das Ergebnis der Bewertung kann dann, wie in der Figur 2 gezeigt, in geeigneter Weise zur Anzeige gebracht werden.

**Patentansprüche**

1. Verfahren zur Überprüfung der Qualität von Punktschweißverbindungen (5), die mittels einer in Kontakt mit den miteinander zu verschweißenden Teilen (1, 2) aus mindestens einem ersten Metall bringbaren Elektrode (3, 4) aus einem zweiten Metall ausgeführt werden, **dadurch gekennzeichnet**, daß die am Schweißpunkt (5) während eines definierten Zeitraums nach Durchführung der Schweißung herrschende Temperatur durch Abgreifen der zwischen den Teilen (1, 2) bzw. an der Elektrode (3, 4) durch das Schweißen induzierten thermoelektrischen Spannung ermittelt und der Verlauf des gemessenen Temperaturabfalles zur Grundlage der Qualitätsbeurteilung gemacht wird, wobei die Qualität um so schlechter anzunehmen ist, je schneller die Kurve der Temperaturwerte abfällt und von der Geraden abweicht.

2. Verfahren nach Anspruch 1,
**dadurch gekennzeichnet,** daß die in an sich bekannter Weise wahrend der Schweißung gemessenen Werte der Schweißspannung (U) und des -stromes (I) in Verbindung mit dem Verlauf des gemessenen Temperaturabfalles zur Grundlage der Qualitätsbeurteilung gemacht werden, wobei die Qualität um so schlechter anzunehmen ist, je kleiner der Quotient aus gemessener Temperatur (T) und eingespeister Leistung (P) ist.

3. Verfahren nach Anspruch 1 oder 2, das mit zwei auf einander entgegengesetzten Seiten der Teile (1, 2) gegenüberliegenden, gleichzeitig mit letzteren in Kontakt kommenden Elektroden (3, 4) ausgeführt wird, **dadurch gekennzeichnet**, daß die Temperatur aus dem Mittelwert zwischen den getrennt an jeder Elektrode (4, 5) gemessenen Spannungen (U) ermittelt wird.

4. Vorrichtung zur Durchführung des Verfahrens nach einem oder mehreren der Ansprüche 1 bis 3, bestehend aus

   a) mindestens einem zwischen den miteinander zu verschweißenden Teilen (1, 2) und einer Schweißelektrode (3, 4) schaltbaren Voltmeter (7, 8);
   b) einem Trigger, der bei Beendigung eines Schweißvorganges ein Signal aussendet;
   c) einem Zeitgeber zur Angabe des Beginns und Endes mindestens einer definierten Zeitspanne ($t_1$ - $t_0$) nach dem Aussenden des Signals der Beendigung des Schweißvorganges;
   d) einer Einrichtung zur Anzeige des zwischen dem Beginn und dem Ende der definierten Zeitspanne erfolgten Abfalls in der Anzeige des Voltmeters (7, 8).

**Claims**

1. Method for examining the quality of spot-welded joints which are produced by means of an electrode which can be brought into contact with the parts which are to be welded to one another and are composed of at least a first metal, said electrode being composed of a second metal, characterized in that the temperature prevailing at the spot weld for a defined period of time after carrying out the welding is determined by picking off the thermoelectric voltage which is induced between the parts and an electrode by the welding, and the behaviour of the measured temperature drop is used as the basis of the quality assessment, the quality being assumed to be poorer the faster the curve of temperature values drops and deviates from a straight line.

2. Method according to Claim 1, characterized in that the values of the welding voltage and of the welding current measured in a manner known per se during welding are used in conjunction with the behaviour of the measured temperature drop as the basis of the quality assessment, the quality being assumed to be poorer the smaller the quotient of the measured temperature and the supplied power is.

3. Method according to Claim 1 or 2, which is carried out using two electrodes which are located opposite one another on opposite sides of the parts and at the same time come to contact with said parts, characterized in that the temperature is determined from the mean value of the voltages measured separately on each electrode.

4. Device for carrying out the method according to one or more of Claims 1 to 3, comprising

a) at least one voltmeter which can be connected between the parts which are to be welded to one another and a welding electrode;

b) a trigger, which emits a signal on completion of a welding process,

c) a time transmitter for defining the start and end of at least one defined time interval ($t_1$ - $t_0$) after the emission of the signal on completion of the welding process;

d) a device for indicating the drop in the voltmeter indication which takes place between the start and end of the defined time intervals.

b) un déclencheur émettant un signal à la fin du processus de soudage ;

c) un minuteur pour indiquer le début et la fin d'au moins une période définie ($t_1$ - $t_0$) après l'émission du signal de la fin du processus de soudage ;

d) un dispositif pour afficher la chute qui a eu lieu entre le début et la fin de la période définie dans l'affichage du voltmètre (7, 8).

## Revendications

1. Procédé pour le contrôle de la qualité d'assemblages soudés par points (5) exécutés au moyen d'une électrode (3, 4) composée d'un deuxième métal, laquelle est susceptible d'être mise en contact avec les pièces (1, 2) à souder les unes aux autres composées d'au moins un premier métal, caractérisé en ce que la température régnant au point de soudage (5) pendant une période définie après l'exécution du soudage est déterminée par prélèvement de la tension thermoélectrique induite par le soudage entre les pièces (1, 2) ou à l'électrode (3, 4) et la courbe de la chute de température mesurée est choisie comme base pour évaluer la qualité, la qualité étant présumée être d'autant plus mauvaise que la courbe des valeurs de température chute vite et diverge de la droite.

2. Procédé selon la revendication 1, caractérisé en ce que les valeurs de la tension de soudage (U) et du courant de soudage (I) mesurées de manière en soi connue pendant le soudage, en combinaison avec la courbe de la chute de température mesurée, sont choisies comme base pour évaluer la qualité, la qualité étant présumée être d'autant plus mauvaise que le quotient température mesurée (T)/puissance alimentée (P) est petit.

3. Procédé selon la revendication 1 ou 2, exécuté au moyen de deux électrodes (3, 4) placées en regard sur des côtés opposés l'un à l'autre des pièces (1, 2) et entrant simultanément en contact avec ces dernières, caractérisé en ce que la température est déterminée à partir de la valeur moyenne des tensions (U) mesurées séparément à chaque électrode (4, 5).

4. Dispositif pour la mise en oeuvre du procédé selon l'une quelconque ou plusieurs des revendications 1 à 3, comprenant

a) au moins un voltmètre (7, 8) susceptible d'être monté entre les pièces (1, 2) à souder les unes aux autres et une électrode de soudage (3, 4);

FIG 1

FIG 2

Triggereingang

Trigger-
Eingangsverstärker

Frequenzverdopplung
und
Gleichrichtung

galvanische
Trennung

Digitaleingang
Microcontroler

Analogeingang
Microcontroler

Microcontroler
Speicher
Parameterspeicher
Programmspeicher

V24 Schnittstelle

V24

Peakdetectorausgang

Löscheingang

Peakdetector

Signaleingang

Eingangsverstärker

Trennverstärker

Ausgangsverstärker

Netzteil

DC-DC
Wandler

EP 0 561 974 B1

FIG 3